# EUROPEAN PATENT SPECIFICATION

(11) **EP 3 034 875 B1**
(45) Date of publication and mention of the grant of the patent: **04.11.2020**
(21) Application number: 14198963.2
(22) Date of filing: 18.12.2014
(51) Int. Cl.: F04B 35/01, F16H 55/36, F04B 39/00

(54) **REFRIGERANT COMPRESSOR**
KÜHLKOMPRESSOR
COMPRESSEUR RÉFRIGÉRANT

(43) Date of publication of application: 22.06.2016
(73) Proprietor: Valeo Japan Co., Ltd., Saitama 360-0193 (JP); Valeo Compressor Europe, s.r.o., 39601 Humplec (CZ)
(72) Inventor: Hirano, Ichiro, SAITAMA, 360-0193 (JP); Sakamoto, Katsumi, SAITAMA, 360-0193 (JP); Amenori, Masanori, SAITAMA, 360-0193 (JP); Ceverny, David, 58001 Havlickuv Brod (CZ)
(74) Representative: Tran, Chi-Hai

(56) References cited:
- WO-A1-2009/153177
- JP-A- 2009 293 645
- US-A1- 2003 098 007
- US-A1- 2005 261 093

## Description

The invention relates to a refrigerant compressor for an air conditioning unit, in particular for a motor vehicle, where a drive pulley is connected to a compressor shaft to operate the air conditioning unit.

Documents US2003/098007, JP2009293645 and WO2009/153177 disclose compressors with drive pulley.

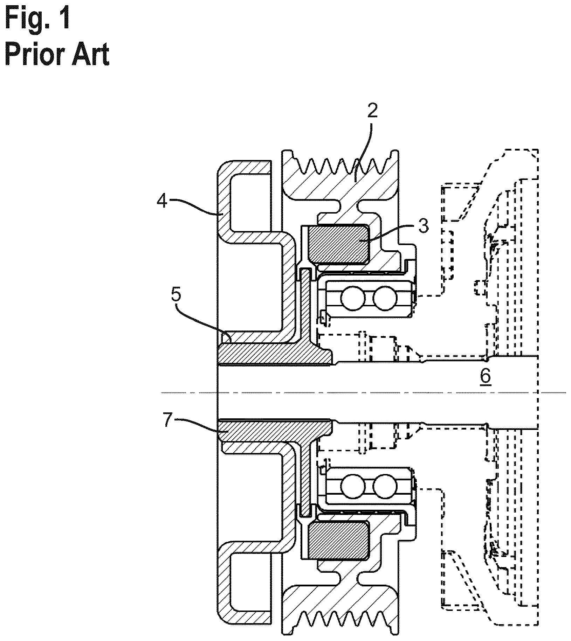

A refrigerant compressor of this type is known from DE 102 54 937 B4. As shown in the schematic view in Figure 1, a drive pulley 2 is connected via a torque limiter element 3 to a hub member 7. Rotation of the drive pulley 2 is transmitted to the hub member 7, which drives the compressor shaft 6. In such arrangements, vibration can arise in the compressor drive assembly due to the various components having their own resonance frequencies, including the drive belt, pulley, bearings, shaft, etc. To avoid such vibrational phenomena, a flywheel or inertia disk 4 is fixed to the hub member 7 as shown in Figure 1. The inertia disk 4 is connected to an outer periphery surface of the hub member 7 in a press-fit connection 5. The disk acts as an inertial mass, which increases the inertial moment of the compressor drive assembly and can consequently shift the natural resonance frequency of the system.

One drawback associated with the conventional arrangement of the flywheel or inertia disk relates to the mechanical connection between the disk 4 and the outer surface of the hub member 7. In the construction of the prior art in Figure 1, the disk is connected to the hub through a press-fit arrangement, while in other configurations (not shown), the disk can be connected to the hub by a threaded connection. These arrangements have the disadvantage that when the rotational speed of the vehicle engine is suddenly changed, in particular suddenly increased or decreased, the rotational speed of the pulley changes accordingly. This results in abrupt variations in the torque transmitted by the pulley 2 to the shaft 6 through the hub member 7. In view of the larger mass of the inertia disk 4 a torque or twisting moment acts on the connection interface 5 between the hub and the disk.

When the connection is formed by press-fit, a repeated and sudden torque load and a reversal of torque applied to the interface can cause material fatigue and eventually a failure of the connection.

When the connection 5 is a threaded connection, the repeated reversal of the applied torque direction at the connection can cause a loosening of the screw connection. Either result is undesirable and can eventually lead to an unwanted disengagement of the disk from hub member and possibly associated damage of the compressor system.

The object of the present invention is to propose a configuration of the inertia disk which will avoid the undesirable resonance frequencies in the compressor drive assembly, while at the same time will improve the reliability and durability of the mechanical connection of the inertia mass element to the hub member.

According to the invention, the object is achieved by a refrigerant compressor according to claim 1. The invention is based on the recognition that connecting the inertia disk directly to the hub avoids many of the prior art problems which are due to the fact that the torque between the hub and the inertia disk is transmitted indirectly via the compressor shaft. By avoiding the detour via the compressor shaft, less elasticity is involved in the torque flow path, resulting in reduced a load on the connection between the hub and the inertia disk. The nut acts as a securing means and thereby improves the safety level and the splined connection has a high strength and does not introduce much torsional elasticity into the torque flow path.

Preferably, the inertia disk is connected to the hub by means of a press-fit connection. This connection can be achieved at low costs with high reliability.

According to a preferred embodiment, a circular collar protrudes from the inertia disk in an axial direction and engages with the hub. A circular collar allows providing an axial displacement path for establishing the press-fit connection.

Preferably, the circular collar engages the interior of a cylindrical sleeve of the hub in a press-fit connection. By choosing suitable dimensions for the sleeve, the rigidity of the press-fit connection can be established in the desired manner.

According to another preferred embodiment, the inertia disk is connected to the hub by means of a threaded connection. Here again, using a direct connection between the hub and the inertia disk improves the torque flow from the hub to the inertia disk, thereby allowing using connection which in the prior art designs have shown some critical behavior.

According to another preferred embodiment, the inertia disk is connected to the hub by means of a positive engagement connection. This type of connection reliably avoids any risk of rotation of the inertia disk relative to the hub.

Preferably, one of the elements hub and inertia disk is provided with a plurality of axially extending lugs which engage with openings provided in the other element. Such design is compact and does not require much space in an axial direction.

Preferably, a surface of the nut is urged against a radial surface of the inertia disk to form a frictional connection. This frictional connection increases the admissible torque which can be transmitted to the inertia disk and thereby increases the strength of the connection between the compressor shaft and the inertia disk.

According to a preferred embodiment, the nut is a cap nut. The cap nut seals or closes the axial end of the compressor shaft which can be provided with an internal thread.

Preferable, a shoulder is provided at the shaft which in a mounted condition engages an axial end of the inertia disk. The shoulder can contribute to torque transmission between the inertia disk and the compressor shaft, thereby increasing the strength of the connection between disk and shaft. Further, the shoulder provides an axial stop for the inertia disk, thereby positively determining the axial position of the disk in a reliable manner.

According to an embodiment of the invention, the shaft is provided with an internal thread for receiving an adjustment bolt, the bolt being provided to adjust the axial position of the shaft in the compressor. The internal thread allows to reliably adjust the axial position of the disk with low tolerances.

Preferably, the inertia disk is made from steel as this allows achieving a high inertia with a compact design.

In a preferred embodiment, the inertia mass is a disk (or flywheel), which is constructed to provide additional inertia in the range of 200 to 800 kg • mm².

In one embodiment, the disk is provided with a circular collar which protrudes in axial direction along the compressor shaft. The outer surface of the circular collar engages with an interior surface of the hub in a press-fit connection.

In another embodiment, the disk can be connected to the hub by means of a threaded connection or a positive engagement connection.

In a further embodiment, either the hub or the inertia disk is provided with a plurality of axially projecting lugs. The lugs are provided and arranged to engage with openings in the other of the hub or disk. In this type of mechanical connection, the disk is directly coupled to the hub in a positive mechanical engagement.

In a further embodiment, a nut is provided which cooperates with a threading on the shaft, and is disposed so as to urge the disk in axial direction against the hub. In particular, when the nut is turned down, an end face of the nut is urged against a radial surface of the inertia disk. With this an additional frictional connection is provided for fixation of the disk, specifically through friction at a thrust surface of the inertia disk. Preferably, the nut is a cap nut.

In another preferred embodiment, a shoulder or step portion is provided on the shaft, which acts as a stop. In the mounted condition, an axial end of the disk abuts against the shoulder. In this arrangement, the inertia disk is sandwiched between the nut and the step portion. The overall fixation is then further improved. In addition to the press-fit connection between the cylindrical surfaces of the hub and the disk, the two end faces of the inertia disk engage in frictional connections with an end face of the nut at one end and the shoulder at the other end. The frictional connections at these two end thrust surfaces further improve the reliability and strength of the direct connection between the inertia disk and the hub.

Further advantages of the present invention will now be described in conjunction with embodiments, which are shown in the following drawings,
Figure 1 shows a schematic drawing of the drive pulley and flywheel assembly of a conventional compressor;
Figure 2 shows a cross section through a compressor shaft and pulley assembly according to a first embodiment of the present invention;
Figure 3 shows an expanded detailed illustration of the interconnecting surfaces of the embodiment in Figure 2;
Figure 4 shows a perspective of a compressor together with drive pulley and inertia mass element in an exploded view;
Figure 5 shows a cross-sectional view of an example not forming part of the present invention; and
Figure 6 shows perspective views of the inertia disk element and the hub of the example of Figure 5.

Figure 1 shows a schematic view of a refrigerant compressor of the prior art, which can be used in an air-conditioning system of a motor vehicle. As mentioned above, the connection 5 between the inertia disk 4 and the hub 7 is conventionally a press-fit or a threaded connection, neither of which is satisfactory and sustainable for prolonged use, in particular in view of the repeated changes in the direction and magnitude of torque applied by the drive pulley.

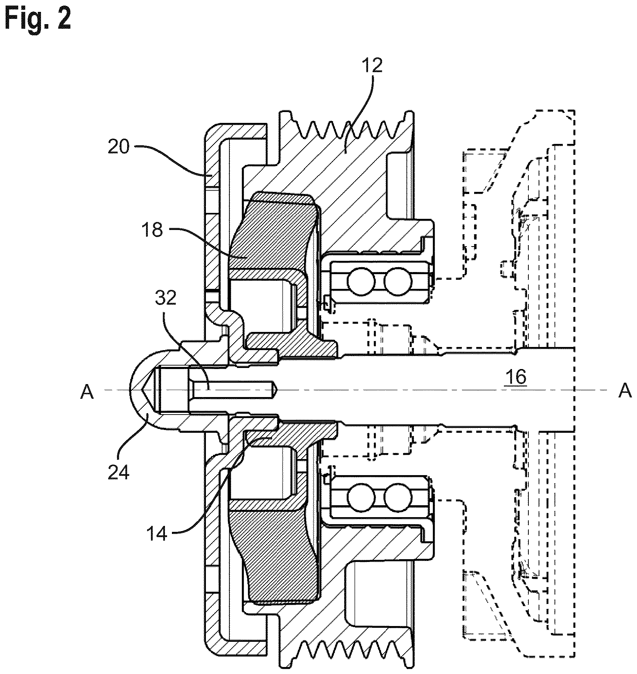

A first embodiment of the present invention is illustrated in Figure 2, where an inertia disk 20 is directly connected to a hub 14 via multiple connection interfaces. A compressor shaft 16 extends along a central axis A and through the hub 14. The shaft 16 extends outwardly beyond the hub and has a free forward end. A nut 24 is engages the forward end of the shaft 16 so as to secure the inertia disk 20.

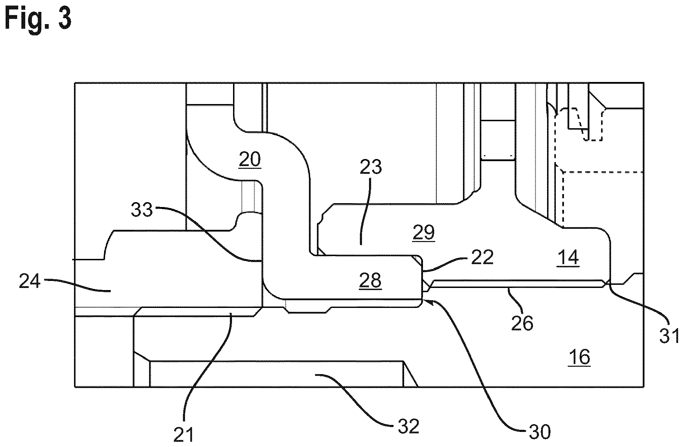

Figure 3 shows a more detailed section of the embodiment of Figure 2, in particular in relation to the fixation of a disk 20. A circular collar 28 protrudes from the disk 20 in axial direction and engages the hub 14. In particular, an outer surface of the circular collar 28 engages an interior surface of a cylindrical sleeve 29 of the hub in a press-fit connection. The press fit can be achieved by providing a slight taper on the interior cylindrical sleeve 29 of the shaft 16 and pressing the collar 28 in an axial direction into the cylindrical sleeve 29 until the collar abuts at an axial shoulder at the end of the sleeve.

Another example of a connection 23 between the disk 20 and the hub 14 would be a threaded connection between the collar 28 and the sleeve 29. In another preferable embodiment, the disk 20 could be connected to the hub 14 in a positive mechanic connection, for example with splines or keys provided on the cylindrical surfaces of the collar 28 and the sleeve 29.

Again referring to Figure 3, the hub 14 itself is preferably attached to the shaft 16 in a spline connection 26. To assemble the drive members, the press-fit connection is first made between the disk 20 and the hub 14 and then the connected elements are fitted over the shaft. The splines of the interior of the hub 14 will then slide axially into the counter-splines on the outer surface of the shaft 16 to form the connection 26.

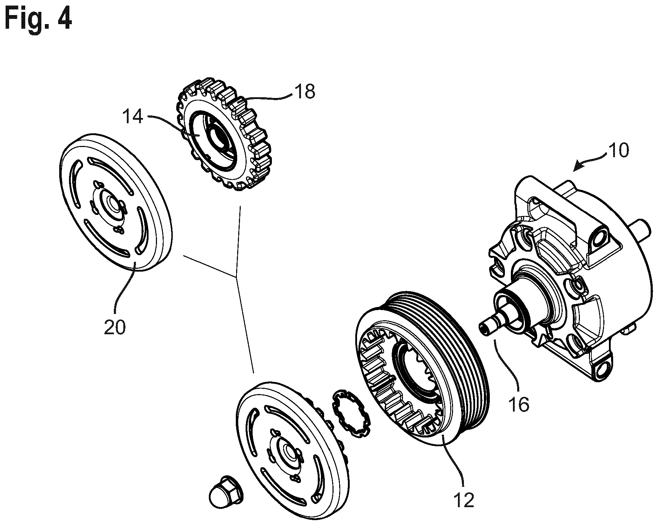

Although relating to a different embodiment, this procedure can be understood with reference to Figure 4, which shows an exploded view of the compressor arrangement. The main compressor body with its shaft 16 allows the successive components of the drive assembly to be mounted on the shaft 16 and fixed to one another. The hub 14 and the disk 20 can be initially connected to one another and the combined unit can be slipped over the shaft 16.

The nut 24 provided at the forward end of the shaft 16 cooperates with a threading 21 on the shaft 16. When tightened, the nut urges the disk 20 in axial direction toward the hub 14. This produces a frictional connection 33 between a bottom end face of the nut 24 and a radial surface of the disk 20. This frictional connection 33 provides a further fixation force for the disk, apart from or in addition to the press-fit connection between the collar 28 and the sleeve 29.

The nut 24 is preferably a cap nut with a bottom face of sufficient radial extension as shown in Figure 3. This mechanically seals the end portion of the compressor shaft.

The shaft 16 is provided with a shoulder 30 as shown in Figure 3 which engages an axial end 22 of the disk 20 in the mounted condition. During assembly, the collar 28 and the cylindrical sleeve 29 are firstly connected in press-fit as mentioned. The combined assembly is then mounted onto the shaft and a forward end 22 of the circular collar 28 engages the step 30. Subsequently, the nut 24 is tightened down which urges the collar 28 against the shoulder 30. This provides a further frictional connection of the disk 20 at the thrust surface 22 of the collar 28.

In summary, both of the end faces of the inertia disk 20 seen in axial direction engage in frictional connections with an end face of the nut 24 at one end and at the shoulder 30 at the other end. The frictional contact at these two end thrust surfaces further improves the reliability and strength of the direct connection between the disk 20 and the hub 14.

As seen in Figure 3, the shaft 16 further includes an internal thread 32 into which an adjustment bolt may be placed. The adjustment bolt in turn can be used to define the distance by which the nut can be turned down, which in turn will then determine the axial position of the shaft with respect to the pulley/ disk assembly.

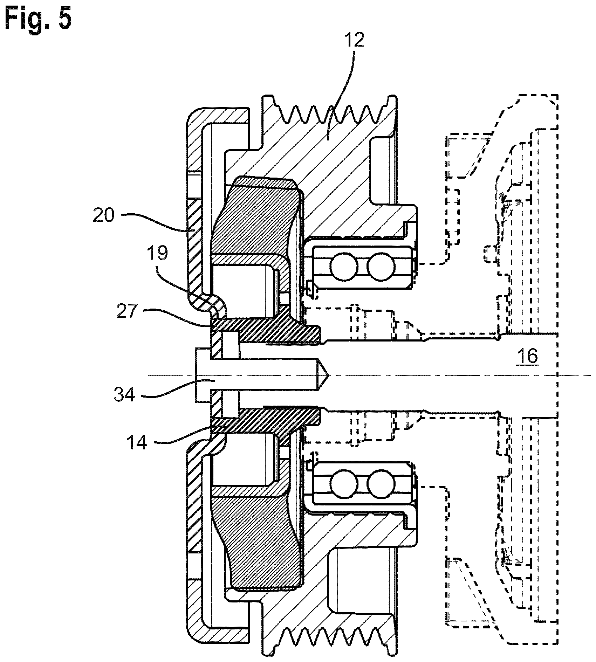

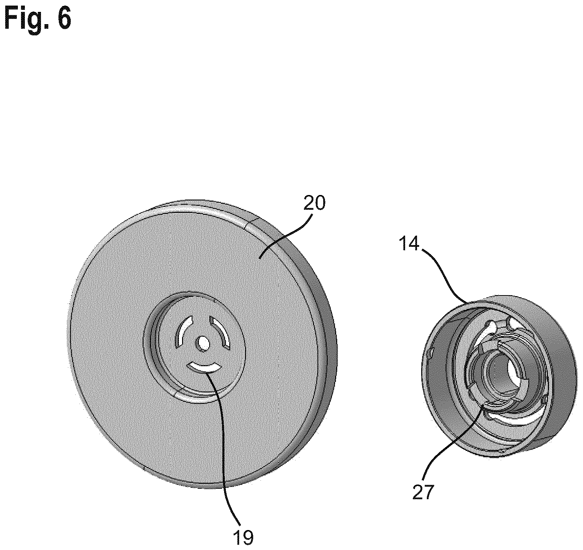

An example not forming part of the present invention is shown in Figures 5 and 6. The disk 20 is secured to the shaft 16 by the bolt 34, which acts largely for centering the inertia disk 20 with respect to the shaft 16. The hub 14, as best shown in Figure 6, comprises a cylindrical protruding portion extending in the forward direction and having axially extending lugs 27. The lugs 27 engage in openings 19 of the disk 20. The engagement of the lugs with the slot openings 19 ensures a positive mechanical connection for transmitting torque between the hub and the disk 20.

## Claims

1. Refrigerant compressor comprising a shaft (16) having an axial direction (A), a hub (14) mounted on the shaft (16) and an inertia disk (20), the inertia disk (20) being directly connected to the hub (14) in a torque-transmitting manner, wherein a nut (24) is provided to cooperate with a threading on the shaft (16) and is adapted to urge the inertia disk (20) in axial direction (A) against the hub (14), **characterized in that** the hub (14) engages with the shaft (16) in a spline connection (26).

2. The refrigerant compressor of claim 1, wherein the inertia disk (20) is connected to the hub (14) by means of a press-fit connection.

3. The refrigerant compressor of claim 2, wherein a circular collar (28) protrudes from the inertia disk (20) in an axial direction and engages with the hub (14).

4. The refrigerant compressor of claim 3, wherein the circular collar (28) engages the interior of a cylindrical sleeve (29) of the hub (14) in a press-fit connection (23).

5. The refrigerant compressor of claim 1, wherein the inertia disk (20) is connected to the hub (14) by means of a threaded connection.

6. The refrigerant compressor of claim 1, wherein the inertia disk (20) is connected to the hub (14) by means of a positive engagement connection (19, 27).

7. The refrigerant compressor of claim 6, wherein one of the elements hub (14) and inertia disk (20) is provided with a plurality of axially extending lugs (27) which engage with openings (19) provided in the other element.

8. The refrigerant compressor according to any of the claims 1 to 7, wherein a surface of the nut (24) is urged against a radial surface of the inertia disk (20) to form a frictional connection (33).

9. The refrigerant compressor according to any of the claims 1 to 8, wherein the nut is a cap nut.

10. The refrigerant compressor according to any of the preceding claims, wherein a shoulder (30) is provided at the shaft (16) which in a mounted condition engages an axial end (22) of the inertia disk (20).

11. The refrigerant compressor according to any of the preceding claims, wherein the shaft (16) is provided with an internal thread (32) for receiving an adjustment bolt, the bolt being arranged to adjust the axial position of the shaft in the compressor (10).

12. The refrigerant compressor according to any of the preceding claims wherein the inertia disk (20) is made from steel.

13. The refrigerant compressor according to any of the preceding claims wherein the additional inertia provided by the inertia disk (20) is between 200 and 800 kg^{∗}mm2.

## Patentansprüche

1. Kühlkompressor, der eine Welle (16), die eine Axialrichtung (A) aufweist, eine auf der Welle (16) montierte Nabe (14) und eine Trägheitsscheibe (20) umfasst, wobei die Trägheitsscheibe (20) drehmomentübertragend direkt mit der Nabe (14) verbunden ist,
wobei eine Mutter (24) vorgesehen ist, um mit einem Gewinde auf der Welle (16) zusammenzuwirken, und dazu eingerichtet ist, die Trägheitsscheibe (20) in Axialrichtung (A) gegen die Nabe (14) zu drücken, **dadurch gekennzeichnet, dass** die Nabe (14) in einer Keilnutverbindung (26) in die Welle (16) eingreift.

2. Kühlkompressor nach Anspruch 1, wobei die Trägheitsscheibe (20) über eine Presspassung mit der Nabe (14) verbunden ist.

3. Kühlkompressor nach Anspruch 2, wobei eine kreisförmige Manschette (28) in Axialrichtung von der Trägheitsscheibe (20) vorsteht und in die Nabe (14) eingreift.

4. Kühlkompressor nach Anspruch 3, wobei die kreisförmige Manschette (28) über eine Presspassung (23) in das Innere einer zylinderförmigen Muffe (29) der Nabe (14) eingreift.

5. Kühlkompressor nach Anspruch 1, wobei die Trägheitsscheibe (20) über eine Gewindeverbindung mit der Nabe (14) verbunden ist.

6. Kühlkompressor nach Anspruch 1, wobei die Trägheitsscheibe (20) über eine formschlüssige Verbindung (19, 27) mit der Nabe (14) verbunden ist.

7. Kühlkompressor nach Anspruch 6, wobei eines der Elemente Nabe (14) und Trägheitsscheibe (20) mit mehreren sich axial erstreckenden Nasen (27) versehen ist, die in Öffnungen (19) eingreifen, die auf dem anderen Element vorgesehen sind.

8. Kühlkompressor nach einem der Ansprüche 1 bis 7, wobei eine Fläche der Mutter (24) gegen eine radiale Fläche der Trägheitsscheibe (20) gedrückt wird, um eine reibschlüssige Verbindung (33) auszubilden.

9. Kühlkompressor nach einem der Ansprüche 1 bis 8, wobei die Mutter eine Hutmutter ist.

10. Kühlkompressor nach einem der vorstehenden Ansprüche, wobei eine Schulter (30) an der Welle (16) vorgesehen ist, die im montierten Zustand in ein axiales Ende (22) der Trägheitsscheibe (20) eingreift.

11. Kühlkompressor nach einem der vorstehenden Ansprüche, wobei die Welle (16) mit einem Innengewinde (32) versehen ist, um eine Einstellschraube aufzunehmen, wobei die Schraube dazu angeordnet ist, die Axialposition der Welle im Kompressor (10) einzustellen.

12. Kühlkompressor nach einem der vorstehenden Ansprüche, wobei die Trägheitsscheibe (20) aus Stahl besteht.

13. Kühlkompressor nach einem der vorstehenden Ansprüche, wobei die zusätzliche Trägheit, die durch die Trägheitsscheibe (20) vorgesehen wird, zwischen 200 und 800 kg*mm² beträgt.

## Revendications

1. Compresseur de réfrigérant comprenant un arbre (16) ayant une direction axiale (A), un moyeu (14) monté sur l'arbre (16) et un disque d'inertie (20), le disque d'inertie (20) étant directement connecté au moyeu (14) d'une manière transmettant un couple, un écrou (24) étant fourni pour coopérer avec un filetage sur l'arbre (16) et étant adapté pour pousser le disque d'inertie (20) dans la direction axiale (A) contre le moyeu (14), **caractérisé en ce que** le moyeu (14) entre en prise avec l'arbre (16) dans une connexion cannelée (26) .

2. Compresseur de réfrigérant de la revendication 1, dans lequel le disque d'inertie (20) est connecté au moyeu (14) au moyen d'une connexion par compression.

3. Compresseur de réfrigérant de la revendication 2, dans lequel un col circulaire (28) dépasse du disque d'inertie (20) dans une direction axiale et entre en prise avec le moyeu (14).

4. Compresseur de réfrigérant de la revendication 3, dans lequel le col circulaire (28) entre en prise avec l'intérieur d'un manchon cylindrique (29) du moyeu (14) dans une connexion par compression (23).

5. Compresseur de réfrigérant de la revendication 1, dans lequel le disque d'inertie (20) est connecté au moyeu (14) au moyen d'une connexion filetée.

6. Compresseur de réfrigérant de la revendication 1, dans lequel le disque d'inertie (20) est connecté au moyeu (14) au moyen d'une connexion à engagement positif (19, 27).

7. Compresseur de réfrigérant de la revendication 6, dans lequel un des éléments moyeu (14) et disque d'inertie (20) est muni d'une pluralité d'ergots s'étendant axialement (27) qui entrent en prise avec des ouvertures (19) disposées dans l'autre élément.

8. Compresseur de réfrigérant selon l'une quelconque des revendications 1 à 7, dans lequel une surface de l'écrou (24) est poussée contre une surface radiale du disque d'inertie (20) pour former une connexion par frottement (33).

9. Compresseur de réfrigérant selon l'une quelconque des revendications 1 à 8, dans lequel l'écrou est un écrou borgne.

10. Compresseur de réfrigérant selon l'une quelconque des revendications précédentes, dans lequel un épaulement (30) est disposé au niveau de l'arbre (16) qui dans un état monté entre en prise avec une extrémité axiale (22) du disque d'inertie (20).

11. Compresseur de réfrigérant selon l'une quelconque des revendications précédentes, dans lequel l'arbre (16) est muni d'un filet interne (32) destiné à recevoir un boulon d'ajustement, le boulon étant agencé pour ajuster la position axiale de l'arbre dans le compresseur (10).

12. Compresseur de réfrigérant selon l'une quelconque des revendications précédentes, dans lequel le disque d'inertie (20) est fabriqué en acier.

13. Compresseur de réfrigérant selon l'une quelconque des revendications précédentes, dans lequel l'inertie supplémentaire fournie par le disque d'inertie (20) est comprise entre 200 et 800 kg*mm².
